(19) Europäisches Patentamt / European Patent Office / Office européen des brevets

(11) **EP 4 468 685 B1**

(12) **EUROPÄISCHE PATENTSCHRIFT**

(45) Veröffentlichungstag und Bekanntmachung des Hinweises auf die Patenterteilung:
**20.05.2026  Patentblatt 2026/21**

(21) Anmeldenummer: **24176595.7**

(22) Anmeldetag: **17.05.2024**

(51) Internationale Patentklassifikation (IPC):
***H04L 67/125*** *(2022.01)*

(52) Gemeinsame Patentklassifikation (CPC):
**H04L 67/125**

(54) **VERFAHREN UND SYSTEM ZUR NACHHALTIGEN INTERNETNUTZUNG**

METHOD AND SYSTEM FOR SUSTAINABLE INTERNET USAGE

PROCÉDÉ ET SYSTÈME D'UTILISATION DURABLE D'INTERNET

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität:  **26.05.2023   DE 102023113931**

(43) Veröffentlichungstag der Anmeldung:
**27.11.2024   Patentblatt 2024/48**

(73) Patentinhaber: **Deutsche Telekom AG**
**53113 Bonn (DE)**

(72) Erfinder: **BENNER, Alexander**
**57627 Gehlert (DE)**

(74) Vertreter: **karo IP**
**Patentanwälte PartG mbB**
**Steinstraße 16-18**
**40212 Düsseldorf (DE)**

(56) Entgegenhaltungen:
**WO-A1-2022/048889      US-A1- 2014 324 407**

**Beschreibung**

Diese Erfindung betrifft ein Verfahren und ein System zur Reduzierung eines Verbrauchs an elektrischem Strom und/oder einer resultierenden Kohlendioxidmenge bei Nutzung einer Dienstleitung durch ein Endgerät über das Internet.

Das Thema Klimaschutz und was jeder selbst dafür machen kann wird derzeit stark diskutiert. Dabei fehlt es oft an dem Verständnis, dass unbedachte Nutzung des Internets zu einem hohen Energieverbrauch beitragen kann. In einer 2019 vom Thinktank "The Shift Project" veröffentlichten Studie, käme das Internet (wäre es ein Staat) beispielsweise auf Platz 6 beim Energieverbrauch weltweit. Dabei ist es nicht nur der elektrische Strom, den die Geräte des Endnutzers beim Zugriff auf das Internet verbrauchen (z. B. Smartphone, Tablet-PV, Desktop oder Laptop), sondern insbesondere auch der elektrische Strom, der bei der Bereitstellung der Services verbraucht wird. So verursacht beispielsweise eine Suchanfrage bei Google einen elektrischen Stromverbrauch von 0,0003 kWh (laut eigenen Angaben von Google). Services mit einem sehr großen Verbrauch an elektrischem Strom sind z. B. das Streaming von Filmen aber auch das Gaming. Nachfolgend eine Übersicht von den Stromverbräuchen und der CO2-Erzeugung, die bei der Nutzung von Video-Streaming über das häusliche LAN entstehen (Borderstep-Institut, https://borderstep.de):

| Aktivität / Service | Stromverbrauch | erzeugtes $CO_2$ |
|---|---|---|
| Eine Stunde Video-Streaming in HD (720p) auf einem Fernseher 65 Zoll | ca. 0,280 kWh* | ca. 130 Gramm* |
| Eine Stunde Video-Streaming in HD (1080p) auf einem Fernseher 65 Zoll | ca. 0,37 kWh* | ca. 172 Gramm* |
| Eine Stunde Video-Streaming in QHD (1440p) auf einem Fernseher 65-Zoll | ca. 0,6 kWh* | ca. 279 Gramm* |
| Eine Stunde Video-Streaming in 4K (2160p) auf einem Fernseher 65-Zoll | ca. 1,3 kWh* | ca. 604 Gramm* |

Die vorgenannten Stromverbräuche und CO2-Erzeugungen entstehen durch a) das verwendete Endgerät, b) das verwendete Kommunikationsnetz und c) das verwendete Rechenzentrum, welches den Service bereitstellt. Beispielsweise macht es kaum einen Unterschied, ob man z.B. auf dem Smartphone einen Film in HD oder SD schaut, im verwendeten Kommunikationsnetz und Rechenzentrum sind die Unterschiede beim Verbrauch von Strom und/oder bei der Erzeugung von $CO_2$ jedoch signifikant.

Neben der Auflösung ist für den Verbrauch von Strom und der Erzeugung von $CO_2$ das verwendete Endgerät aber durchaus auch relevant:

| Aktivität / Service | Stromverbrauch | erzeugtes $CO_2$ |
|---|---|---|
| Eine Stunde Video-Streaming in HD (1080p) auf einem Fernseher 65 Zoll | ca. 0,37 kWh* | ca. 172 Gramm* |
| Eine Stunde Video-Streaming in HD (1080p) auf einem Fernseher 50 Zoll | ca. 0,3 kWh* | ca. 139 Gramm* |
| Eine Stunde Video-Streaming in HD (1080p) auf einem Notebook | ca. 0,24 kWh* | ca. 111 Gramm* |
| Eine Stunde Video-Streaming in HD (1080p) auf einem Tablet | ca. 0,23 kWh* | ca. 107 Gramm* |
| Eine Stunde Video-Streaming in HD (1080p) auf einem Smartphone | ca. 0,22 kWh* | ca. 102 Gramm* |

Bei Nutzung der vorgenannten Services über das Mobilfunknetz, würde sich der Stromverbrauch und die CO2-Erzeugung signifikant erhöhen. In Abhängigkeit des aktuellen Strommix, der für den erzeugten Strom gerade vorhanden ist, ist die CO2-Erzeugung sehr volatil.

Den Nutzern des Internets ist es häufig gar nicht bewusst, welchen Stromverbrauch und welche CO2-Erzeugung sie bei der Nutzung des Internets verursachen. Hier setzen das erfindungsgemäße Verfahren und das erfindungsgemäße System an. Es macht insbesondere die verursachten Verbräuche transparent und ermöglicht so eine bewusstere Nutzung des Internets. Wenn die bei der Nutzung des Internets ganz allgemein oder auch ganz konkret hinsichtlich eines genutzten Service (z. B. Video-Streaming) transparent ist, welcher ökologische Fußabdruck (d.h. zum Stromverbrauch und/oder der CO2-Erzeugung) verursacht ist, lassen sich darauf basierend Änderungen der Bereitstellung der Dienstleistung initiieren, um eine nachhaltigere Nutzung zu ermöglichen.

Der Ist-Zustand zeichnet sich allerdings dadurch aus, dass es bei der Nutzung des Internets nicht transparent wird, welche Stromverbräuche und CO2-Erzeugungen konkret dabei entstehen. Wegen der fehlenden Transparenz ist es auch nicht möglich aus den Stromverbräuchen und CO2-Erzeugungen, direkte Konsequenzen abzuleiten oder insbesondere dementsprechende Angebote zur Verfügung zu stellen.

Aufgabe des Patents ist es ein Verfahren und ein System zur Verfügung zu stellen, welches den Verbrauch an elektrischem Strom und/oder der resultierenden Kohlendioxidmenge bei Nutzung einer Dienstleitung durch ein Endgerät über das Internet zu reduzieren. Insbesondere ist es Ziel der Erfindung, dass die Nutzung von Dienstleistungen über das Internet ökologischer und bewusster geschieht.

Aus der WO 2022/048889 A1 ist ein Verfahren zur Reduzierung eines Verbrauchs an elektrischem Strom oder der Kohlendioxidmenge bei Nutzung einer Dienstleistung durch ein Endgerät über das Internet bekannt. Entsprechendes ist auch in der US 2014/324407 A1 offenbart.

Die Aufgabe wird durch ein Verfahren des Anspruchs 1 gelöst, wobei bevorzugte Ausführungsformen in den Unteransprüchen und der Beschreibung dargelegt sind.

Das erfindungsgemäße Verfahren zur Reduzierung eines Verbrauchs an elektrischem Strom und/oder einer resultierenden Kohlendioxidmenge bei Nutzung einer Dienstleitung durch ein Endgerät über das Internet umfasst die folgenden Schritte:

- Bestimmung des Verbrauchs an elektrischem Strom und/oder der resultierenden Kohlendioxidmenge bei der Nutzung der Dienstleistung durch ein Endgerät über das Internet mittels einer zentralen Bestimmungseinheit, wobei die zentrale Bestimmungseinheit Bestandteil eines zentralen Backend ist, welches einen Speicher umfasst, der Ortsinformationen von Recheneinheiten, insbesondere Servern, die die Dienstleistung zur Verfügung stellen, aufweist;
- Mitteilung des Verbrauchs an elektrischem Strom und/oder der resultierenden Kohlendioxidmenge von der Bestimmungseinheit an eine Steuereinheit; wobei in diesem Schritt zumindest die entsprechenden Daten technisch von der Bestimmungseinheit zu der Steuereinheit übertragen werden;
- Anzeigen des Verbrauchs an elektrischem Strom und/oder der resultierenden Kohlendioxidmenge mittels einer Anzeigeeinheit des Endgeräts; und/oder
- Steuerung der Bereitstellung der Dienstleistung in Abhängigkeit des Verbrauchs an elektrischem Strom und/oder der resultierenden Kohlendioxidmenge mittels der Steuereinheit, wobei eine andere Recheneinheit, insbesondere ein anderer Server, für die Zurverfügungstellung der Dienstleistung ausgewählt wird, wobei die andere Recheneinheit einen geringeren Verbrauch an elektrischem Strom und/oder eine geringere resultierende-Kohlendioxidmenge basierend auf der Entfernung zwischen dem Endgerät und der Recheneinheit, insbesondere des Servers, aufweist.

Das erfindungsgemäße Verfahren ermöglicht so eine Transparenz darüber, welche Stromverbräuche und CO2-Erzeugungen bei der Nutzung des Internets gerade generiert bzw. bisher generiert wurden. Dadurch, dass der Nutzer bei der Nutzung des Internets den verursachten Verbrauch an elektrischem Strom und/oder der resultierenden Kohlendioxidmenge sowie der damit verbundenen Kosten kennt, bzw. abschätzen kann, kann er sein Handeln überdenken und bewusster die Bereitstellung der Dienstleistung steuern. Das erfindungsgemäße Verfahren ermöglicht es auf diese Weise, dass das Internet sowohl nachhaltiger genutzt wird, indem weniger Strom verbraucht und/oder CO2 erzeugt wird als bisher und zudem auch analog zum Verbrauch zusätzlicher regenerativer und CO2-frei erzeugter Strom entstehen kann, auf Basis dementsprechender Tarife und Investitionen.

Vorzugsweise kann damit auch angegeben werden, welche Kosten dabei verursacht werden, wenn man dafür z.B. normale Endkundenpreise für den Stromverbrauch anlegt. Auf Basis des bestimmten und mitgeteilten Verbrauchs an elektrischem Strom und/oder der erzeugten CO2-Menge könnten beispielsweise Mobilfunkbetreiber, Anbieter eines Internetanschlusses und/oder Anbieter der Dienstleistung den Ressourcenverbrauch und/oder die verursachten Kosten:

- an die Nutzer insbesondere auf Basis des Verursacherprinzips weitergeben,
- Tarife bereitstellen in denen ein festgelegtes Kontingent an verursachten Stromverbräuchen, CO2-Erzeugungen und/oder Kosten enthalten ist und danach wird z.B. die Auflösung verringert oder die Datenrate gedrosselt,
- Öko-Tarife anbieten, die grundsätzlich eine ökologische Nutzung bedeuten und/oder
- Tarife bereitstellen, die eine Flat-Rate für verursachte Stromverbräuche und/oder CO2-Erzeugungen enthält.

Damit die Nutzung des Internets noch nachhaltiger wird, genügt es dabei nicht, wenn Mobilfunkbetreiber, Anbieter eines Internetanschlusses und/oder Anbieter einer Dienstleitung oder Service Zusatzeinnahmen für sich generieren. Diese Zusatzeinnahmen müssen dazu führen, dass analog zum verursachten Stromverbrauch auch ein neues Angebot entsteht. Zum Beispiel in Form von regenerativ und CO2-frei erzeugtem Strom, der beispielsweise vom Betreiber des Mobilfunknetzes, Bereitstellers des Internetanschlusses und/oder des Anbieters der Dienstleistung auf Basis der erzielten Zusatzeinnahmen bereitgestellt oder eine dementsprechende Bereitstellung bei Dritten veranlasst wird.

Vorzugsweise ermöglicht das erfindungsgemäße Verfahren es den ökologischen Fußabdruck sowohl bei einem, mehreren oder allen bei der Nutzung eines Service (z.B. eines Streaming-Service) verwendeten Dienstleistern in Erfahrung zu bringen und dementsprechende Konsequenzen abzuleiten. Übliche Dienstleister sind hierbei Mobilfunkprovider, Anbieter eines Internetanschlusses, Betreiber des Internets, Anbieter des Service selber.

Im Betriebssystem iOS von Apple sind bereits Funktionen integriert, die das Nutzungsverhalten der Nutzer erfassen und visualisieren. Unter der Funktion "Bildschirmzeit" kann der Nutzer in Erfahrung bringen, wie lange z. B. eine bestimmte App oder Funktion (Service) genutzt wurde. Unter der Funktion "Batterie" kann der Nutzer in Erfahrung bringen welche App oder Funktion (Service) wie viel Strom verbraucht hat. Der Stromverbrauch auf einem Smartphone oder Tablet ist jedoch nur marginal, gegenüber dem im Kommunikationsnetz und Rechenzentrum des Anbieters einer Dienstleistung (je nach genutztem Service) verbrauchten Strom und erzeugtem CO2. Beispielsweise beträgt Video-Streaming der Stromverbrauch des Endgeräts, nur ca. 2 % beim Smartphone und ca. 6 % beim Tablet, bezogen auf den Gesamtstromverbrauch des Service. Dieser Umstand wird dem Nutzer derzeit nicht transparent. Auch wird dem Nutzer nicht transparent von wo er eigentlich einen Service nutz, d. h. welchen Weg müssen die Daten dabei zurücklegen, um auf dem verwendeten Endgerät, wie z. B. einem Smartphone, angezeigt zu werden.

Die Anzeige der wie vorgenannt erhaltenen Werte zum Stromverbrauch und/oder CO2-Erzeugung und auch zum zurückgelegten Weg bei der Nutzung eines Service, kann im erfindungsgemäßen Verfahren erfolgen. Daraus resultierende Konsequenzen können darin bestehen, dass bei als ungünstig oder zu hoch festgelegten Stromverbräuchen, CO2-Erzeugungen und/oder Wegen z. B. Zusatzkosten entstehen, ein (Umwelt-)Budget verbraucht oder die Datenrate des Service gedrosselt wird. Auch andere Konsequenzen sind denkbar, wie z. B. der Neuaufbau der IP-Verbindung zur Nutzung des Service, wenn der festgestellte Weg, über den das Routing erfolgt eine Länge erreicht, die in Abhängigkeit der tatsächlichen Entfernung zwischen dem verwendeten Endgerät und dem Server (d.h. vom Endgerät adressierte IP-Zieladresse des Service) als nicht akzeptabel angesehen wird. Häufig gibt es unterschiedliche IP-Adressen, über die der Service bereitgestellt werden kann. Die Auswahl einer von der Entfernung, des Stromverbrauchs und/oder der CO2-Erzeugung "besten" IP-Adresse kann somit ebenfalls in einer weiteren Form der Ausgestaltung des erfindungsgemäßen Verfahrens gezielt erfolgen.

Konsequenzen betreffen vorzugsweise nicht ausschließlich das verwendete Endgerät. So könnte für einen Nutzer, der sehr darauf achtet, dass wenig oder sogar gar keine CO2-Erzeugung bei der Nutzung des Internets entsteht, das von ihm "eingesparte" $CO_2$ auf einer Plattform (z. B. Web-Portal) zur Anzeige gebracht werden, in Form einer "Bestenliste". Dies kann für namentlich genannte Nutzer geschehen (falls sie dies möchten) und/oder auch kumuliert z. B. für einen Mobilfunk- und/oder Internetanbieter. Ermittelt werden könnte das "eingesparte" CO2 z.B. dadurch, dass der durchschnittliche CO2- Verbrauch bei der Nutzung eines konkreten Service dem gegenübergestellt wird. Verwendete Endgeräte sollten es erlauben, den vom Nutzer gewünschten ökologischen "Fußabdruck" vorzugeben. Entweder ganz grob (z. B. in GERING, MITTEL oder HOCH) und/oder auch sehr detailliert per Einstellung der als "akzeptabel" anzusehenden Verbräuche an Strom, der Erzeugung von $CO_2$ und/oder Entfernung in Bezug zu einem Referenzwert, der absolut oder relativ sein kann. Eine akzeptable Entfernung kann beispielsweise absolut festgelegt sein (z. B. auf den halben Umfang der Erde begrenzt), sie kann aber auch relativ festgelegt sein (z.B. maximal die doppelte Entfernung in Bezug auf die kürzeste Verbindung auf dem Luftweg). Alternativ oder ergänzend sollte der gewünschte "Fußabdruck" auch durch Mobilfunkanbieter, Anbieter eines Internetzugangs und/oder Anbieter eines Service (z. B. Streaming-Service) festlegbar sein, z. B. durch das Angebot entsprechender Tarife oder die Möglichkeit entsprechender Voreinstellungen.

In einer bevorzugten Ausführungsform der Erfindung wird die Bestimmung des Verbrauchs an elektrischem Strom und/oder der resultierenden Kohlendioxidmenge anhand der folgenden Kriterien durchgeführt:

- der Dienstleistung und/oder einer Dienstleistungskategorie (z.B. Videostream ing);
- einer Qualität der Dienstleistung, insbesondere einer Auflösung (z.B. HD 1080p);
- einer Nutzungsdauer der Dienstleistung (z.B. Stunden);
- eines Ortes einer Recheneinheit, insbesondere eines Servers, von dem die Dienstleistung zur Verfügung gestellt wird (z.B. bereitgestellt über eine IP-Adresse in den USA);
- der Entfernung zwischen dem Endgerät und dem Ort der Recheneinheit, insbesondere des Servers (z.B. 2000 km); und/oder
- einer Kommunikationsverbindung, die für die Dienstleistung verwendet wird, wobei bevorzugt zwischen einer Mobilfunkverbindung und einer Festnetzverbindung unterschieden wird.

Bei der Bestimmung, respektive Erfassung, wird vorzugsweise protokolliert, wann und ggf. wie lange dies geschah und dies in Bezug auf ein Zeitnormal.

Die Erfassung geschieht beispielsweise im Browser eines PCs (z.B. über ein bereits enthaltenes oder nachträglich installiertes Plug-in), im Router des Telekommunikationsanbieters, in einer App auf dem Smartphone und/oder als Teil des verwendeten Betriebssystems. Die Erfassung kann vorzugsweise auch an einer zentralen Stelle geschehen, wobei insbesondere Herausforderungen bei der Privatsphäre und beim Datenschutz zu berücksichtigen sind.

In einer bevorzugten Ausgestaltung des erfindungsgemäßen Verfahrens erfolgt keine zentrale Speicherung der Nutzung des Internets, gleiches gilt für die erfassten Verbräuche bzw. Kosten. Für das erfindungsgemäße Verfahren werden zentral bereitgestellte Werte, die zur Berechnung der Stromverbräuche, der CO2-Erzeugung und der Kosten für eine Dienstleistung oder einen Service anzusetzen sind, welche sich im Laufe der Zeit und abhängig von der Art und/oder dem Ort der Nutzung (z. B. Mobilfunk, Festnetz, genaue Geo-Lokation) ändern können. Vorzugsweise gilt dies auch für Werte, die für eine Analogiebetrachtung verwendet werden. Eine Analogiebetrachtung besteht z.B. darin, dass ein konkreter Stromverbrauch (z.B. entstanden durch das Streamen eines Filmes für 2 Stunden) in Relation gesetzt wird, mit dem Stromverbrauch eines E-Autos oder mit der CO2-Erzeugung eines mit Diesel betriebenen Autos. Dann könnte dort z.B. als Zahl, Text, Tabelle und/oder Graphik angegeben sein, dass das Streamen des Films 440 Wh an Strom verbraucht und dabei 204 Gramm an CO2 erzeugt wurden. Mit diesem Strom könnte ein E-Auto im Durchschnitt ca. 3 Kilometer weit fahren und ein Auto mit Verbrennungsmotor (Diesel) hätte die gleiche Menge an CO2 nach ca. 1,5 Kilometer erzeugt. Angenommen ein VW-Golf mit E-Motor verbraucht im Durchschnitt 0,15 kWh pro Kilometer und ein VW-Golf mit Dieselmotor erzeugt im Durchschnitt 140 Gramm CO2 pro Kilometer. Eine andere Analogiebetrachtung besteht beispielsweise in einer Glühbirne mit LED-Technik. Diese verbraucht 8,5 Watt und ist damit vergleichbar hell wie eine Glühbirne ohne LED-Technik mit 60 Watt. Die Glühbirne mit LED-Technik müsste deutlich über 50 Stunden am Stück brennen, um den gleichen Strom zu verbrauchen, wie er beim Streamen des Films verbraucht worden ist. Diese Aufführung der vorgenannten Analogiebetrachtungen ist nicht als abschließend zu betrachten.

Die zur Bestimmung der Verbräuche, Erzeugungen und Kosten anzusetzenden Werte, die sich im Laufe der Zeit und abhängig von der Art und/oder dem Ort der Nutzung (z. B. Mobilfunk, Festnetz, genaue Geo-Lokation) ändern können, sind ein Aspekt für die Umsetzung des erfindungsgemäßen Verfahrens.

In einer bevorzugten Ausführungsform der Erfindung hat ein die Dienstleistung zur Verfügung stellender Anbieter für die jeweilige Dienstleistung einen Wert bestimmt, der einen für die zur Verfügungstellung der Dienstleistung erforderlichen Verbrauch an elektrischem Strom und/oder eine für die zur Verfügungstellung der Dienstleistung erforderliche resultierende Kohlendioxidmenge bestimmt und den Bestimmungseinheiten mitteilt, insbesondere wobei der Wert bestimmt wird:

- anhand der Dienstleitung in Relation zu einem Zeitnormal;
- anhand einer Datenrate;
- anhand einer Konstante, die auf dem verwendeten Endgerät auf Grundlage des aktuell übertragenen Datenvolumens für den Service und/oder des Datenvolumens für den Service in einer festgelegten Zeit ermittelt wird; und/oder

anhand der Dienstleistung pro bestimmte Nutzungseinheit, beispielsweise für das Streamen einer Audioeinheit und/oder das Streamen einer Videoeinheit.

In einem ersten Beispiel ermittelt der Anbieter einer Dienstleistung zumindest in Abhängigkeit seiner Dienstleistung (seines Service) und in Relation zu einem Zeitnormal einen Wert für den Verbrauch an Strom und/oder die Menge an erzeugtem CO2. Beispielsweise gibt ein Videostreaminganbieter fortwährend an, wie hoch der Verbrauch gerade ist. Die Ermittlung basiert z.B. auf dem aktuellen Stromverbrauch und/oder der aktuellen CO2-Erzeugung, aufgeteilt auf die Anzahl der aktuellen Nutzer.

In einem zweiten Beispiel ermittelte der Anbieter einer Dienstleistung zumindest in Abhängigkeit seiner Dienstleistung (seines Service), einer Datenrate (und/oder eines Datenvolumens) und in Relation zu einem Zeitnormal, einen Wert für den Stromverbrauch und/oder die CO2-Erzeugung. Beispielsweis gibt ein Videostreaminganbieter fortwährend an, wie hoch der Stromverbrauch und die CO2-Erzeugung jedes übertragene Megabit (und/oder je Gigabit pro Minute) gerade ist. Die Ermittlung basiert z.B. auf dem aktuellen Stromverbrauch und/oder der CO2-Erzeugung aufgeteilt auf die aktuelle Datennutzung der aktuellen Nutzer.

In einem dritten Beispiel ermittelt der Anbieter der Dienstleistung zumindest in Abhängigkeit seiner Dienstleistung (seines Service) und in Relation zu einem Zeitnormal, eine Konstante, mit der auf dem Endgerät auf Basis des aktuell übertragenen Datenvolumens für den Service und/oder des Datenvolumens für den Service in einer festgelegten Zeit, ein Wert für den Stromverbrauch und/oder die CO2-Erzeugung errechnet wird. Beispielsweise gibt ein Videostreaminganbieter fortwährend an, welchen Wert die Konstante gerade hat. Die Ermittlung basiert z.B. dem aktuellen Stromverbrauch und/oder der CO2-Erzeugung aufgeteilt auf die aktuelle Datennutzung der Nutzer.

In einem vierten Beispiel ermittelt der Anbieter einer Dienstleistung zumindest in Abhängigkeit seiner Dienstleistung und einer konkreten Nutzung (z.B. dem Stream eines Filmes) den konkreten für den gesamten Film verursachten Stromverbrauch und/oder die CO2-Ergeugung.

Vorzugsweise werden die von dem Anbieter der Dienstleistung ermittelten Werte selbst verwendet und/oder an die Endgeräte und/oder ein Backend weitergeleitet, um insbesondere als Grundlage für Öko-Einstellungen und -Tarife zu fungieren. Bevorzugt werden die ermittelten Werte von Dienstleistungsanbietern anderen Dienstleistern und/oder staatlichen Stellen weitergegeben oder eingesammelt. Insbesondere erfolgt die Weitergabe und/oder die Abfrage über eine definierte Schnittstelle.

In einer weiteren bevorzugten Ausführung der Erfindung ermittelt ein Bereitsteller des Verfahrens die Werte zum Stromverbrauch und/oder der CO2-Erzeugung für eine Dienstleistung und/oder die Konstanten selbst und/oder über einen weiteren Dienstleister. Vorzugsweise gibt es dafür die folgenden unterschiedlichen Ansätze, wobei die Auflistung nicht als abschließend anzusehen ist:

- Historienbetrachtung, wobei die von Dienstleistern veröffentlichte Stromverbräuche und/oder CO2-Erzeugungen in Relation gesetzt werden zu veröffentlichten Datenmengen die in einem Bezugszeitraum (z.B. dem letzten Jahr) für die Nutzung der Dienstleistung angegeben werden.
- Historien-/Realbetrachtung, wobei die von Dienstleistern veröffentlichten Stromverbräuche und/oder CO2-Erzeugungen in Relation gesetzt werden zu bekannten oder ermittelten Datenmengen zur Nutzung der Dienstleistung in einem Bezugszeitraum (z.B. dem letzten Monat), oder wobei von Dienstleistern bekannte oder ermittelte Stromverbräuche in Relation gesetzt werden zu von Dienstleistern veröffentlichten Datenmengen zur Nutzung der Dienstleistung in einem Bezugszeitraum (z.B. dem letzten Monat).
- Realbetrachtung, wobei die von Dienstleistern bekannten oder ermittelten Stromverbräuche und/oder CO2-Erzeugungen in Relation gesetzt werden zu bekannten oder ermittelten Datenmengen zur Nutzung der Dienstleistung in einem Bezugszeitraum (z.B. der letzten Stunde).

In einer weiteren bevorzugten Ausführung der Erfindung ist dem Anbieter der Dienstleistung für die Dienstleistung kein Wert bekannt, auf dessen Basis der Stromverbrauch und/oder der CO2-Erzeugung bestimmt werden kann. In diesem Fall wird der Wert vorzugsweise geschätzt und/oder berechnet. Für die Schätzung und/oder Berechnung werden bevorzugt die untenstehenden Ansätze verwendet, wobei die Auflistung nicht abschließend ist:

- Historienbetrachtung, wobei die von Anbietern der Dienstleistung veröffentlichten Stromverbräuche in Relation gesetzt werden zu veröffentlichten Mengen an erzeugtem CO2, die in einem Bezugszeitraum (z.B. dem letzten Jahr) für die Nutzung der Dienstleistung angegeben wurden.
- Historien-/Realbetrachtung 1, wobei die von Anbietern der Dienstleistung veröffentlichten Stromverbräuche in Relation gesetzt werden zu bekannten oder ermittelten Mengen an erzeugtem CO2 für die Nutzung der Dienstleistung in einem Bezugszeitraum (z.B. dem letzten Monat), oder wobei die von Anbietern der Dienstleistung bekannten oder ermittelten Stromverbräuche in Relation gesetzt werden zu veröffentlichten Mengen an erzeugtem CO2 für die Nutzung der Dienstleistung in einem Bezugszeitraum (z.B. dem letzten Monat).
- Realbetrachtung, wobei die von Anbietern der Dienstleistung bekannte oder ermittelte Stromverbräuche in Relation gesetzt werden zu bekannten oder ermittelten Mengen an erzeugtem CO2 für die Nutzung der Dienstleistung in einem Bezugszeitraum (z. B. der letzten Stunde).
- Historien-/Realbetrachtung 2, wobei die von Anbietern der Dienstleistung veröffentlichten Stromverbräuche auf einen konkreten Zeitraum heruntergerechnet (z. B. eine Stunde) und zur aktuellen Zusammensetzung der Stromerzeugung in Relation gesetzt werden. Solche Werte liefern z.B. Portale im Internet, die fortwährend den aktuellen Erzeugungsmix von Strom bekannt machen. Immer dann, wenn im Erzeugungsmix von Strom eine konventionelle Erzeugung (d. h. mit CO2-Erzeugung) enthalten ist, ist somit auch die Menge an erzeugtem CO2 berechenbar. Die CO2-Erzeugung von z.B. Braunkohlekraftwerken ist dabei ebenso bekannt, wie die durch sie erzeugte Strommenge. Daraus ist eine CO2-Menge je kWh für die Erzeugungsart "Braunkohle" errechenbar. Für andere konventionelle Stromerzeuger (mit CO2-Erzeugung) ist der Stromverbrauch und die verursachte CO2-Menge ebenso bekannt. Damit lassen sich auf die gleiche Art und Weise auch für diese Erzeugungsarten die Menge an erzeugtem CO2 je kWh errechnen. Für die Verwendung im erfindungsgemäßen Verfahren kann dann z.B. (a) die CO2-Erzeugung für die ungünstigste/höchste Erzeugungsart verwendet werden (z.B. Braunkohle), (b) der zu diesem Zeitpunkt aktuelle oder prognostizierte Strommix im Durchschnitt, bestehend aus allen konventionellen Stromerzeugern (mit CO2-Erzeugung, oder (c) der auf eine aktuell erzeugte Strommenge anfallende Anteil an CO2, der sich aus dem jeweiligen Anteil des konventionell erzeugten Stroms, je Erzeugungsart ergibt. Beispiel:

| | |
|---|---|
| Aktueller Stromverbrauch: | 100 GW |
| Stromerzeugung erneuerbar (CO2-frei): | 50 GW |
| Stromerzeugung mit Braunkohle: | 30 GW |
| Stromerzeugung mit Steinkohle: | 20 GW |
| CO2-Menge je erzeugter kWh Braunkohle: | 1,5 g |
| CO2-Menge je erzeugter kWh Steinkohle: | 1,3 g |

Für 1 kWh Stromverbrauch ließe sich dann die CO2-Erzeugung wie folgt errechnen:

CO2-Erzeugung = (30 GW/100 GW) x 1,5 g + (20 GW/100 GW) x 1,3 g = 0,71 g = 710 mg

In einer weiteren bevorzugten Ausführung der Erfindung wird der Stromverbrauch und/oder die CO2-Erzeugung des Zugangs- bzw. Übertragungsweg in analoger weise ermittelt, wie der Stromverbrauch und die CO2-Erzeugung bei der Nutzung einer konkreten Dienstleistung eines Anbieters einer Dienstleistung. So wird vorzugsweise aus dem Stromverbrauch eines Mobilfunkbetreibers, in Relation zu den über das Mobilfunknetz in einem konkreten Zeitraum insgesamt übertragenen Datenvolumen, ein Wert errechnet werden der z.B. in kWh je übertragenen Mbit angegeben wird. Durch Verwendung dieses Wertes, kann der bei der Nutzung des Mobilfunknetzes entstehende zusätzliche Verbrauch an Strom und damit auch die erzeugte Menge an $CO_2$ in Bezug auf die Nutzung einer konkreten Dienstleistung eines Anbieters ermittelt werden. Zur Ermittlung der konkreten $CO_2$-Erzeugung wird besonders bevorzugt der oben unter Historien-/Realbetrachtung 2 beschriebene Ansatz verwendet.

In einer weiteren bevorzugten Ausführung der Erfindung wird der für die Übertragung auf einer Übertragungstrecke entstehende Stromverbrauch und/oder die erzeugte Menge an $CO_2$ auf Grundlage der IP-Adresse bestimmt, insbesondere wobei ein vom einem IP-Paket zurückgelegter Mindestwegs berücksichtigt wird. Ermittelbar ist dieser in Bezug auf den aktuellen Standort des verwendeten Endgeräts und des Standorts des verwendeten Servers auf Basis dessen IP-Adresse.

Beispielsweise erfolgt dies wie folgt: Die Entfernung zwischen dem verwendeten Endgerät und dem verwendeten Server mit der IP-Zieladresse beträgt Luftlinie 1.000 Kilometer. Der Umfang der Erde beträgt im Durchschnitt 40.030 Kilometer. Daraus kann sich ein Faktor für die Internetnutzung errechnen lassen, in diesem Fall z.B. 0,025. Angenommen der Stromverbrauch aller Internetprovider auf der Welt beträgt im Jahr X Terrawattstunden (TWh) und das übertragene Datenvolumen Y Terrabit (Tb). Dann lassen sich diese Werte umrechnen in einen Wert Datenvolumen Y bei einem Stromverbrauch von 1 kWh und auch in einen Stromverbrauch X bei einem Datenvolumen von 1 Mbit für einen Bezugszeitraum von z.B. 1 Stunde. Nimmt man an, dass ein Datenvolumen von 1 Mbit einen Stromverbrauch in Höhe von 0,001 kWh an, so ergibt dies 0,001 kWh/Mb. Bei der Nutzung des Internets wird für den zurückgelegten Weg bei einer Übertragung von 500 Mbit (Mb) der Stromverbrauch dann wie folgt berechnet: 500 Mb x 0,001 kWh/Mb x 0,025 = 0,0125 kWh.

Zur Berechnung der $CO_2$-Erzeugung werden beispielsweise Portale im Internet verwendet, bzw. Schnittstellen dazu, die je nach Region/Land oder für die komplette Erde die dementsprechenden aktuellen Werte für die Stromerzeugung liefern. Für einen Server, der sich z.B. in einem anderen Land in 1000 Kilometer Entfernung (Luftlinie) zum Endgerät befindet und nach 750 Kilometer die Landesgrenze zum anderen Land überquert, kann die jeweils auf Basis der aktuellen Erzeugung ermittelte $CO_2$-Erzeugung entsprechend gewichtet werden. Beispielsweise werden ¾ der aktuellen Erzeugungswerte aus dem Strommix des Landes, in dem sich das Endgerät befindet, und ¼ der aktuellen Erzeugungswerte aus dem Strommix in dem Land, in dem sich der Server befindet, verwendet. Vorzugsweise wird mittels Internetseiten, wie z.B. https://dnslytics.com, in Erfahrung gebracht, in welchem geographischen Gebiet sich die IP-Adresse (IP-Zieladresse) befindet. Die IP-Adresse über die ein Service/eine Dienstleistung bereitgestellt wird, sind dem verwendeten Browser oder der verwendeten App bekannt bzw. über diese in Erfahrung zu bringen, beispielsweise mittels eines DNS-Service. Das verwendete Endgerät und/oder Router kennt diese ebenfalls. Damit kann in Relation zum aktuellen Aufenthaltsort, z.B. des Smartphones, ermittelt werden, wie weit die Entfernung zwischen beiden Punkten ist. Besonders bevorzugt kann unter Verwendung von Techniken und/oder Informationen, die eine Nachvollziehbarkeit des verwendeten Routings der IP-Pakete erlauben, auch der konkret zurückgelegte Weg für die Berechnung des Strom-verbrauchs und/oder der $CO_2$-Erzeugung ermittelt und dementsprechend zur Anzeige gebracht werden (z. B. auf dem verwendeten Endgerät).

In einer bevorzugten Ausführung der Erfindung wird beim Anzeigen der Verbrauch an elektrischem Strom und/oder resultierenden Kohlendioxidmenge angezeigt:

- im Vergleich mit der bisherigen Nutzung auf dem Endgerät (A, B);
- im Vergleich mit der bisherigen Nutzung auf allen Endgeräten eines Nutzers des Endgeräts;
- im Vergleich zur Nutzung von anderen Endgeräten;
- im Vergleich zur aktuellen Nutzung eines anderen Endgeräts mit dem geringsten Stromverbrauch und/oder $CO_2$-Erzeugung;
- im Vergleich zur aktuellen Nutzung eines anderen Endgeräts mit dem höchsten Stromverbrauch und/oder $CO_2$-Erzeugung; und/oder
- im Vergleich zu mindestens einem Referenzwert.

Auf diese Weise wird erreicht, dass dem Nutzer der jeweilige Stromverbrauch und/oder die erzeugte $CO_2$-Menge einfach und leicht nachvollziehbar deutlich wird.

In einer weiteren bevorzugten Ausführung der Erfindung wird ein im Vergleich geringerer (oder höherer) Verbrauch an elektrischem Strom und/oder eine geringere (oder höhere) resultierenden Kohlendioxidmenge hervorgehoben dargestellt. Besonders bevorzugt ist die Verwendung einer anderen Farbe, einer anderen Schriftgröße, einer anderen Anzeigefeldgröße und/oder einer anderen Anzeigeumrandung.

Beispielsweise wird bei der Anzeige ein bekanntes Farbmuster verwendet, welches den Vergleich deutlich hervorhebt. Beispielsweise wird, wenn der Vergleich positiv ausfällt, d.h. z.B. eine geringere $CO_2$-Erzeugung vorliegt, die Farbe GRÜN für die Anzeige verwendet oder zur Hervorhebung und Kenntlichmachung verwendet. Bei einem negativen Vergleich, bei dem z. B. eine höhere CO2-Erzeugung vorliegt, ist wird die Farbe ROT für die Anzeige verwendet.

Beispielsweise wird durch die Anzeige hervorgehoben dargestellt, wenn ein Vergleich besonders positiv oder negativ ausfällt, indem

- z.B. die Größe der Anzeige, des Anzeigefeldes oder eines Anzeigerahmens geändert wird,
- nur die relevantesten Ergebnisse des Vergleichs dargestellt werden (z.B. nur bei hoher CO2-Erzeugung), und/oder
- eine Anzeige direkt im Kontext der Nutzung erfolgt, z.B. durch Einblenden eines Ausrufezeichens und/oder negativ vorbesetzten Icons (z. B. :-( ) auf dem Bildschirm des Endgeräts.

Dabei ist es vorteilhaft, wenn Anzeigen zum aktuellen ökologischen Fußabdruck bei der Nutzung eines Service (z.B. Verbrauch von Strom, CO2-Erzeugung bei zurückgelegtem Weg) so erfolgen, dass ein Kontext zur Anzeige zum Akku des verwendeten Endgeräts hergestellt werden kann. Dies wird z.B. erreicht, wenn alternativ oder ergänzend zu der Position zur Anzeige des Akkus und seines Ladezustandes, die Anzeige zum ökologischen Fußabdruck erfolgt. Beispielsweise zeigt der Akku an wie hoch die Ladung des Endgeräts ist und die Anzeige zum ökologischen Fußabdruck zeigt an, wie hoch gerade die verursachte "Entladung" der Erde ist.

Die Anzeige kann beispielsweise per Zahl, Text, Graphik, Animation, Rahmen oder Bild erfolgen, alternativ oder ergänzend können diese aber auch haptisch (z.B. per Vibration) und/oder akustisch (z.B. durch einen Ton oder eine Tonfolge) erfolgen.

In einer bevorzugten Ausführung der Erfindung erfolgt die Steuerung der Bereitstellung der Dienstleistung manuell durch einen Nutzer des Endgerätes, der mittels einer Eingabeeinheit eine Änderung der Bereitstellung der Dienstleistung durch die Steuereinheit des Endgeräts auslöst. Alternativ oder kumulativ erfolgt die Steuerung der Bereitstellung automatisch, wobei eine Änderung der Bereitstellung der Dienstleistung durch die Steuereinheit erfolgt, insbesondere wenn ein Referenzwert für den Verbrauch an elektrischem Strom, zurückgelegter Strecke der IP-Pakete und/oder die resultierende Kohlendioxidmenge überschritten wird.

Durch die Steuerung der Bereitstellung der Dienstleistung wird vorzugsweise der Verbrauch an elektrischem Strom und/oder die resultierende Kohlendioxidmenge, die für die Bereitstellung der Dienstleistung einhergeht, reduziert. Vorzugsweise umfasst das Endgerät eine Eingabeeinheit, welche beispielsweise als ein, insbesondere auf der Anzeigeeinheit dargestelltes, Bedienelement oder Auswahlmenü umgesetzt ist. Durch Bedienung der Eingabeeinheit ist der Nutzer des Endgeräts in der Lage die Bereitstellung der Dienstleistung zu steuern und damit den Verbrauch an elektrischem Strom und/oder der resultierenden Kohlendioxidmenge positiv zu beeinflussen. Die automatische Steuerung der Bereitstellung der Dienstleistung durch die Steuereinheit ermöglicht es vorteilhafterweise den Stromverbrauch und/oder die erzeugte Kohlendioxidmenge bei Bereitstellung der Dienstleistung zu reduzieren. Insbesondere erfolgt eine Änderung der Bereitstellung der Leistung, wenn ein Referenzwert für den Stromverbrauch, zurückgelegte Entfernung der IP-Pakete und/oder die erzeugte Kohlendioxidmenge überschritten wird. Vorzugsweise wird der Referenzwert vom Nutzer des Endgerätes vorgegeben und in dem Speicher des Endgeräts gespeichert. Insbesondere ist bevorzugt, dass ein zentraler Referenzwert für eine Dienstleistung gespeichert ist und bei Überschreiten dieses zentralen Referenzwertes eine Anpassung der Bereitstellung der Dienstleistung durch den Anbieter der Dienstleistung und/oder der Netzwerkbetreiber erfolgt. Der zentrale Referenzwert kann dabei ganz allgemein aber auch in Abhängigkeit von Art und Typ des verwendeten Endgeräts festgelegt sein (z. B. für Mobiles Endgerät, iPhone15).

In einer bevorzugten Ausführung der Erfindung erfolgt die Steuerung der Bereitstellung der Dienstleistung dadurch,

- dass die Datenrate für die Nutzung der Dienstleistung reduziert wird, insbesondere indem Qualität und/oder Auflösung der Dienstleistung reduziert wird; und/oder
- dass eine andere Recheneinheit, insbesondere ein anderer Server, für die Zurverfügungstellung der Dienstleistung ausgewählt wird, insbesondere wobei die andere Recheneinheit einen geringeren Verbrauch an elektrischem Strom und/oder eine geringere resultierende Kohlendioxidmenge aufweist, und/oder eine geringere Entfernung zum Endgerät aufweist.

Durch Steuerung/Anpassung der Datenrate für die Nutzung der Dienstleistung lässt sich auf einfache und effiziente Weise der Verbrauch an elektrischem Strom und/oder die resultierende Kohlendioxidmenge beeinflussen, insbesondere reduzieren, indem die Datenrate reduziert wird. Auch der Wechsel der Recheneinheit, welche die Dienstleistung zur Verfügung stellt, ermöglicht eine einfache und effiziente Reduzierung des Verbrauchs an elektrischem Strom und/oder der resultierenden Kohlendioxidmenge, da sowohl der Übertragungsweg reduziert werden kann als auch eine effizientere Recheneinheit verwendet werden kann.

In einer bevorzugten Ausführung der Erfindung erfolgt die Bestimmung des Verbrauchs an elektrischem Strom und/oder einer resultierenden Kohlendioxidmenge mittels einer zentralen Bestimmungseinheit. Die zentrale Bestimmungseinheit ist dabei Bestandteil eines zentralen Backend, welches einen Speicher umfasst, der folgenden Informationen aufweist:

- Ortsinformationen von Recheneinheiten, insbesondere Servern, die die Dienstleistung zur Verfügung stellen;
- Informationen zum Verbrauch des elektrischen Stroms und/oder der resultierenden Kohlendioxidmenge von Recheneinheiten, insbesondere Servern, die die Dienstleistung zur Verfügung stellen;
- Angaben zu Verbräuchen an elektrischen Strom und/oder der resultierenden Kohlendioxidmenge für die Dienstleistung, insbesondere in Abhängigkeit von Qualität und/oder Auflösung der Dienstleistung; und/oder
- Angaben zu den Kosten, die mit den Verbräuchen an elektrischen Strom und/oder der resultierenden Kohlendioxidmenge verbunden sind.

Diese Informationen werden verwendet, um den Verbrauch an elektrischem Strom und/oder die resultierende Kohlendioxidmenge zentral zu bestimmen.

Das Vorsehen einer zentralen Recheneinheit, respektive eines zentralen Backend, hat den Vorteil, dass die für die Bestimmung des Stromverbrauchs und/oder der CO2-Erzeugung erforderlichen Daten zentral hinterlegt sind. Dies spart insbesondere Rechen- und Speicherressourcen in den Endgeräten. Außerdem ermöglicht eine zentrale Bestimmungseinheit auf einfache Weise das Sammeln von Informationen von einer Vielzahl von Endgeräten und Nutzern.

In einer bevorzugten Ausführung der Erfindung wird der von der zentralen Bestimmungseinheit bestimmte Verbrauch an elektrischem Strom und/oder die resultierende Kohlendioxidmenge an die

- die Bestimmungseinheit und/oder die Steuereinheit des Endgerätes; und/oder
- die die Dienstleistung zur Verfügung stellende Recheneinheit, insbesondere den Server, übermittelt.

Besonders bevorzugt wird für die Übermittlung ein Steuersignal übertragen, welches vorzugsweise den Verbrauch an elektrischem Strom und/oder die resultierende Kohlendioxidmenge mittels eines Parameters angibt.

Die Verwendung eines Steuersignals, welches vom zentralen Backend an die Endgeräte und/oder die die Dienstleistung zur Verfügung stellenden Recheneinheiten gesendet wird, ermöglicht eine zentrale Steuerung der Bereitstellung der Dienstleistung. Beispielsweise wird durch das Steuersignal eine Änderung der Bereitstellung der Dienstleistung auf dem Endgerät und/oder die Recheneinheiten des Dienstleisters eine Änderung der Bereitstellung der Dienstleistung (z.B. geringere Datenrate, anderer Server) initiiert.

Die Erfindung betrifft auch ein System zur Reduzierung eines Verbrauchs an elektrischem Strom und/oder einer resultierenden Kohlendioxidmenge bei Nutzung einer Dienstleitung durch ein Endgerät über das Internet (21), welches eine Bestimmungseinheit, eine Steuereinheit, und eine Anzeigeeinheit des Endgeräts aufweist und dazu eingerichtet das obengenannte Verfahren durchzuführen.

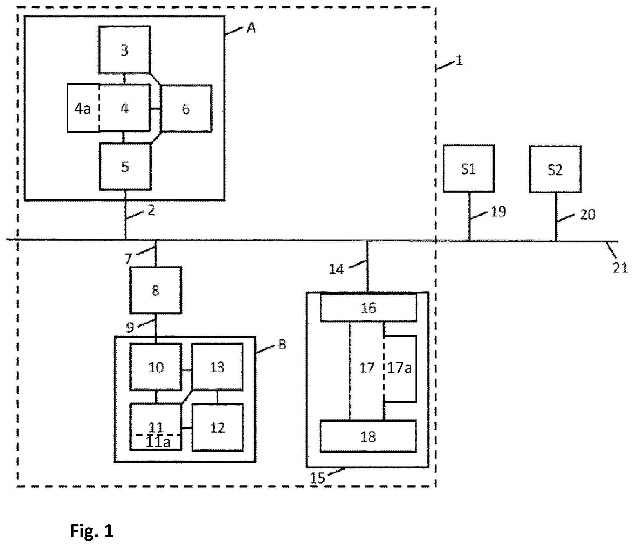

Im Folgenden sind bevorzugte Ausführungsformen der vorliegenden Erfindung unter Bezugnahme auf die Figur 1 beschrieben.

Figur 1 zeigt das erfindungsgemäße System und veranschaulicht das erfindungsgemäße Verfahren zur Reduzierung eines Verbrauchs an elektrischem Strom und/oder einer resultierenden Kohlendioxidmenge bei Nutzung einer Dienstleistung oder eines Service durch ein Endgerät über das Internet.

Im Folgenden werden Merkmale der Erfindung anhand von bevorzugten Ausführungsbeispielen erläutert. Die vorliegende Offenbarung ist nicht auf die konkret genannten Merkmalskombinationen beschränkt. Vielmehr können die hier genannten Merkmale beliebig zu erfindungsgemäßen Ausführungsformen kombiniert werden, sofern dies nicht ausdrücklich ausgeschlossen ist.

Die beiden Endgeräte A und B sind mit dem Internet 21 verbunden. Beim Endgerät A handelt es sich beispielsweise um ein Smartphone, das über das Mobilfunknetz 2 mit dem Internet 21 verbunden ist. Beim Endgerät B handelt es sich um einen Laptop- oder Desktop-PC, der über das 9 Hausnetz, den 8 Router und das 7 Festnetz mit dem 21 Internet verbunden ist.

Endgerät A beinhaltet ein 5 Internet-Gateway A. Das 5 Internet-Gateway steht in einer mindestens logischen Kommunikationsverbindung mit der lokalen Steuereinheit 4 in Kontakt, wobei die Steuereinheit 4 eine Bestimmungseinheit 4a aufweist und über mindestens einer logischen Kommunikationsverbindung mit einem lokalen Speicher 3 verbunden ist. Das Internet Gateway 5 stellt für das Endgerät A (ein Mobilfunkgerät) den Zugang über das Mobilfunknetz 2 zum Internet 21 zur Verfügung. Abhängig von der Ausgestaltung des erfindungsgemäßen Systems und Verfahrens, wird die Steuerung 4 beispielsweise durch eine logische Einheit realisiert, wie z.B. eine separate Applikation oder als Bestandteil das Betriebssystem (z.B. iOS) des Mobilfunkgerätes. Der lokale Speicher 3 besteht vorzugsweise aus einem für die Applikation exklusiv reservierten Speicherplatz, oder aber wenn das erfindungsgemäße Verfahren nicht über eine separate Applikation, sondern über das Betriebssystem oder als Teil einer Anwendung (z.B. Internet-Browser) realisiert wird, in Form des allgemein im Endgerät A für dieses nutzbaren Speichers.

Die Anzeige 6 steht zumindest logisch in Verbindung mit dem Speicher 3, der Steuereinheit 4 und/oder dem Internet-Gateway 5. Die Anzeige 6 des Endgerätes A zeigt den aktuellen ökologischen Fußabdruck bei der Nutzung des Internets an. Dabei wird vorzugsweise der Stromverbrauch und/oder die CO2-Erzeugung eines konkreten Service angegeben, welcher über den Server S1 oder den Server S2 zur Verfügung gestellt wird. Beispielsweise stellt der Server S1 einen Streaming-Service und der Server S2 einen Gaming-Service zur Verfügung.

Dargestellt werden können über die Anzeige 6 folgende Angaben über den genutzten Service (die genutzte Dienstleistung), wobei die Aufzählung nicht abschließend ist.

- Der Stromverbrauch und/oder CO2-Erzeugung in einem definierten Zeitraum über alle Nutzungen dieses Service hinweg, z. B. für Streaming-Service durch Server S1;
- Die angefallenen Stromkosten für den aktuell genutzten Service, insbesondere, wenn man diesen selbst bezahlen müsste (z.B. bezogen auf 40 Cent für die kWh), z. B. für Streaming-Service durch Server S1;
- Die angefallenen Stromkosten in einem definierten Zeitraum über alle Nutzungen dieses Service hinweg (z. B. bezogen auf 40 Cent für die kWh), z. B. für jeglichen Streaming-Service durch Server S1;
- Die Entfernung (z. B. in Kilometern) den die Datenpakete mindestens zurücklegen mussten, damit sie auf dem Endgerät A, bzw. dem Endgerät B, für einen aktuellen genutzten Service und/oder für jede Nutzung dieses Service in einem definierten Zeitraum angezeigt werden konnten,
- Analogiebetrachtungen, bei denen die vorherigen Werte z.B. in Relation gesetzt werden mit dem Stromverbrauch eines E-Auto, d.h. mit Angabe der Strecke X, die man mit diesem Strom hätte fahren können, der CO2-Erzeugung eines Autos mit Verbrennungsmotor, d.h. die gleiche CO2-Erzeugung, die erzielt worden wäre, wenn ein Diesel-PKW eine Strecke X gefahren wäre und/oder dem Stromverbrauch einer Glühbirne, d. h. mit Angabe der Zeit Y, in der man mit diesem Strom die Glühbirne hätte leuchten lassen können;
- Die Angabe der vorgenannten Werte kumuliert über alle genutzten Services (z.B. Streaming-Service und Gaming-Service) in einem definierten Bereich;
- Die Angabe der vorgenannten Werte als Vergleich des aktuellen mit einem vorherigen definierten Zeitbereich (z.B. in dieser Woche, in der letzten Woche, in der vorletzten Woche);
- Die Angabe der vorgenannten Werte in einer Betrachtung der Historie und Entwicklung; und/oder
- Die Angabe der vorgenannten Werte in Relation zu einem als durchschnittlich bzw. normal definierten Stromverbrauch und/oder CO2-Erzeugung, beispielsweise auf Basis des Durchschnitts anderer Endgeräte, Nutzer oder Referenzwerte, wobei insbesondere ein Hinweis erscheint, mit der Bitte/Aufforderung die Auflösung des Streams zu ändern (z.B., wenn man dabei ist einen Film in 4K auf sein Smartphone mit 6,5 Zoll großem Display zu streamen und die CO2-Erzeugung dabei sehr hoch ist). Der Hinweis könnte auch in einem Icon, Symbol oder Rahmen bestehen welcher dann ein- oder mehrmals, ggf. auch dauerhaft angezeigt wird.

Vorteilhaft in einer anderen Ausführung des erfindungsgemäßen Verfahrens ist es, dass die Anzeige mehrfach vorhanden ist. Beispielsweise sind in der App oder der dementsprechenden Funktion des Betriebssystems (z.B. vergleichbar mit "Bildschirmzeit" und "Batterie" in iOS) alle Werte vorhanden, wobei an anderer Stelle zusätzlich noch ein Auszug des oder der wichtigsten Werte (Ergebnisse) erfolgt. Welche Ergebnisse wichtig sind, entscheidet die konkrete Ausführung des erfindungsgemäßen Verfahrens, das verwendete Betriebssystem (z.B. iOS) und/oder der Nutzer. Ebenso ist es möglich, dass in Abhängigkeit des genutzten Tarifs (z. B. zum Mobilfunk oder genutzten Service) Ergebnisse alternativ oder ergänzend angezeigt werden. Vorzugsweise werden wichtige Ergebnisse dauerhaft auf dem Bildschirm eingeblendet, vergleichbar mit der Batterieanzeige auf einem Smartphone, die angibt, wie groß die Ladung der Batterie aktuell noch ist. Die Anzeige des aktuellen Stromverbrauchs und/oder CO2-Erzeugung bei der Nutzung des Service, z. B. eines Streaming- oder KI-Service, könnte dazu korrespondierend dargestellt werden.

Das Endgerät B umfasst eine 10 Netzwerkkarte. Die Netzwerkkarte 10 steht in einer mindestens logischen Kommunikationsverbindung mit einer lokalen Steuerung 11, wobei die lokale Steuerung 11 eine Bestimmungseinheit 11a umfasst und mittels mindestens einer logischen Kommunikationsverbindung mit einem Speicher 12 verbunden ist.

Die 10 Netzwerkkarte stellt über ein Hausnetz 9, eine Router 8 und ein Festnetz 7 eine Verbindung zum Internet 21 her. Abhängig von der Ausgestaltung des erfindungsgemäßen Verfahrens, besteht die Steuerung 11 in einer zusätzlichen Anwendung auf dem PC, einer Erweiterung (z.B. als Plug-in) im verwendeten Browser (z. B. Chrome-Browser) oder aber diese wird bereits inhärent über das Betriebssystem (z. B. Win11) realisiert. Das Hausnetz 9 kann sowohl als LAN und/oder WLAN ausgeprägt sein. Beispielsweise besteht der Speicher 12 entweder in einem für die Anwendung bzw. die Erweiterung im Browser reservierten Speicherplatz oder in Form des allgemein im Endgerät B vorhandenen nutzbaren Speichers, z.B. auf einem Laufwerk. Der Speicher 12 kann aber auch z. B. Teil des Routers 8 sein.

Die Anzeige 13 steht zumindest logisch in Verbindung mit dem Speicher 12, der Steuerung 11 und/oder der Netzwerkkarte 11. Die Anzeige 13 zeigt den aktuellen ökologischen Fußabdruck bei der Nutzung des Internets 21, bzw. eines konkreten Service an, wie z.B. eines Streaming-Service oder eines Gaming-Service. Über die Anzeigeeinheit 13 des Endgeräts B können die oben im Zusammenhang mit der Anzeige des Endgerätes A aufgezählten Angaben in analoger Weise dargestellt werden.

Vorzugsweise ist beim erfindungsgemäßen Verfahren die Anzeige mehrfach vorhanden. Beispielsweise sind in der Anwendung oder einer dementsprechenden Funktion des Betriebssystems (z.B. Win11) alle Werte vorhanden, wobei an anderer Stelle zusätzlich noch ein Auszug des oder der wichtigsten Werte (Ergebnisse) dargestellt wird. Welche Ergebnisse wichtig sind entscheidet die konkrete Ausführung des erfindungsgemäßen Verfahrens, das verwendete Betriebssystem (z. B. Win11) und/oder der Nutzer. Ebenso ist es möglich, dass in Abhängigkeit des genutzten Tarifs (z. B. Internet, Services) Ergebnisse alternativ oder ergänzend angezeigt werden. Vorteilhaft ist es, wenn aktuelle Ergebnisse zum ökologischen Fußabdruck dauerhaft auf dem Bildschirm, im Browser und/oder der Fußzeile des Laptops eingeblendet sind, insbesondere im Kontext mit der Batterieanzeige, die angibt, wie groß die Ladung des Akkus im verwendeten Laptop aktuell noch ist. Unter Verwendung eines Desktops ist die Anzeige im Kontext mit der Anzeige zum Anschluss an das Hausnetz (LAN) 9 vorteilhaft. Die Anzeige könnte aber auch an anderer Stelle erfolgen. Die Anzeige kann selbstverständlich auch Teil des genutzten Service, z.B. Streaming-Service, sein und direkt im Kontext des angezeigten Bildes oder Ergebnisses (z. B. auf einen Prompt hin bei einer KI) bei der Nutzung des Service angezeigt werden.

Der Streaming-Service wird über das Internet 21, durch den 19 Internetanschluss und den Server S1 zur Verfügung gestellt. Der Gaming-Service wird über das Internet 21 durch den Internetanschluss 20 und den Server S2 zur Verfügung gestellt. Diese Services sind stellvertretend zu sehen für alle Service, die im bzw. über das Internet nutzbar sind, so z.B. auch E-Mail, KI-Anwendungen (z. B. Bots) oder das Surfen im Internet.

In einer weiteren Ausgestaltung des erfindungsgemäßen Systems und Verfahrens, können die Anbieter des Streaming-Service und/oder des Gaming-Service selbst oder ein dafür verwendeter Dienstleister auch konkrete Werte zum aktuellen oder durchschnittlichen Stromverbrauch und/oder $CO_2$-Erzeugung liefern, die dann vorzugsweise in ein Backend 15 übernommen werden.

Das Backend 15 ist über ein Internet-Gateway 16 und einen Internetanschluss 14 mit dem Internet 21 verbunden. Mit dem Internet-Gateway 16 ist eine zentrale Steuerungseinheit 17 verbunden, die eine zentrale Bestimmungseinheit 17a umfasst und mit einem zentralen Speicher 18 verbunden ist.

In einer bevorzugten Ausführung des erfindungsgemäßen Systems und Verfahrens, enthält der zentrale Speicher 18 insbesondere keine Angaben über das Verhalten eines Nutzers, d.h. welche Services dieser nutzt z.B. auf dem Endgerät A oder dem Endgerät B in welchem Umfang oder Qualität nutzt. Diese Informationen liegen vorzugsweise lokal vor und können von den Anzeigeeinheiten 6 und 13 zur Anzeige gebracht werden. Der zentrale Speicher 18 enthält die zur Berechnung des ökologischen Fußabdrucks benötigten Werte, welche denn Endgerät A und/oder Endgerät B zur Verfügung gestellte werden oder von diesen abrufbar sind. Diese Werte werden vorzugsweise auch auf anderem Wege zugänglich gemacht, abgefragt oder bereitgestellt werden, z.B. über eine verwendbare Schnittstelle zu einem für das erfindungsgemäße Verfahren allgemein nutzbaren Web-Portal im Internet, diese ist in Figur 1 nicht dargestellt.

Zur Bestimmung des ökologischen Fußabdrucks werden folgende Werte benötigt, wobei die Auflistung nicht abschließend ist:

- Stromverbrauch und $CO_2$-Erzeugung in einer definierten Zeit pro Service, Qualität des Service, Endgerät oder Datenmenge oder -rate, beispielsweise in Form von folgenden Angaben:

| Aktivität/Service | Stromverbrauch | CO2-Erzeugung |
|---|---|---|
| Eine Stunde Video-Streaming in HD (1080p) auf einem Fernseher 65 Zoll | 0,37 kWh | 172 Gramm |
| Eine Stunde Video-Streaming in HD (1080p) auf einem Fernseher 50 Zoll | 0,3 kWh | 139 Gramm |
| Eine Stunde Video-Streaming in HD (1080p) auf einem Notebook | 0,24 kWh | 111 Gramm |
| Eine Stunde Video-Streaming in HD (1080p) auf einem Tablet | 0,23 kWh | 107 Gramm |
| Eine Stunde Video-Streaming in HD (1080p) auf einem Smartphone | 0,22 kWh | 102 Gramm |
| 1 Gbit Video-Streaming | 0,2 kWh | 100 Gramm |
| 10 MB/s Video-Streaming | 0,005 kW | 4 Gramm/h |

- Werte oder Faktoren, um die der Stromverbrauch und die $CO_2$-Erzeugung für einen Service in Relation zur Qualität und dem verwendeten Endgerät ggf. noch korrigiert werden muss, insbesondere in Abhängigkeit des Zugangs zum Kommunikationsnetz. Unter Verwendung des Mobilfunknetz 2 ergeben sich deutlich höhere Werte (zusätzliche Verbräuche) für den Stromverbrauch und/oder die $CO_2$-Erzeugung als bei Verwendung des Festnetz 7. Alternativ zu Werten oder Faktoren können die Angaben auch pro Service, Qualität des Service, Zugang zum Internet 21 und Endgerät hinterlegt sein.

- Anzusetzende Kosten bei Eigenverbrauch von Strom, z.B. 40 Cent die kWh.

- Entfernungstabellen und/oder Geokoordinaten, damit das erfindungsgemäße System und Verfahren die zurückgelegte (Mindest-)Entfernung der Datenpakte bei der Nutzung eines Service angeben kann. Vorzugsweise kann auf diese Angaben verzichtet werden, wenn die lokale Steuerung 4 des Endgerät A oder die lokale Steuerung 11 des Endgerät B in der Lage sind diese selbst zu ermitteln, beispielsweise auf Basis der Extraktion der IP-Adresse für den Service auf dem Gerät und der Verwendung von Services zur Geolokation von IP-Adressen.

- Der zu verwendende Service zur Geolokation von IP-Adressen, insbesondere sofern dieser nicht auf dem verwendeten Endgerät bereits vorhanden ist.

Nachfolgend werden drei bevorzugte Nutzungsformen für die Nutzung des erfindungsgemäßen Systems und Verfahrens aufgezeigt. Grundsätzlich ist es möglich, dass sowohl der Nutzer, der Mobilfunkanbieter, der Anbieter des Internetanschlusses, der Betreiber des Internets und der Anbieter des Service - entsprechend des aktuellen ökologischen Fußabdrucks und/oder basierend auf Voreinstellungen und Vorgaben bei der Nutzung des Service - den Fußabdruck auf dem Endgerät A und/oder dem B zur Anzeige bringen kann und/oder die Bereitstellung des Service beeinflusst oder steuert. Eine Beeinflussung kann darin bestehen, dass ein kürzerer Weg für die IP- Verbindung verwendet wird, die Qualität der Anzeige (z. B. Auflösung) verringert wird und/oder die Datenrate für die Nutzung des Service herabgesetzt wird. In Abhängigkeit des genutzten Service (z.B. eines KI-Bots) kann z.B. auch die Rechenleistung temporär verringert werden, um dadurch den ökologischen Fußabdruck zu verbessern.

In einer bevorzugten ersten Nutzungsform wird der Weg ermittelt, der zwischen dem verwendeten Endgerät A und/oder Endgerät B und der IP-Zieladresse für die Bereitstellung des Service (z.B. durch Server S1 oder S2) besteht. Die Entfernung kann z.B. per Geo-Location ermittelt werden. Sollte es möglich sein, exakte Informationen über das bestehende Routing verwenden zu können, so wird vorzugsweise darauf basierend noch genauer der zurückgelegte Weg ermittelt.

Im Backend 15, insbesondere im zentralen Speicher 18, liegen Informationen für den genutzten Service vor, aus denen ableitbar ist, dass das verwendete Endgerät A (oder Endgerät B), die von seiner aktuellen Position aus nicht als nächstliegend anzusehende IP-Adresse verwendet, um den Service abzurufen. Diese Informationen können vorzugsweise ebenfalls im lokalen Speicher 6 (oder 12) vorliegen. Daraufhin veranlasst entweder das 15 Backend, über ein in Figur 1 nicht dargestelltes Steuersignal, dass eine neue IP-Verbindung zum Service aufgebaut wird (d.h. zu der nächstgelegenen IP-Zieladresse). In einer alternativen Ausführungsform geschieht dies durch die lokale Steuerung 4 (oder 11), ohne dass das Backend 15 dafür ein Steuersignal versenden.

Das Steuersignal vom Backend 15 können auch Betreiber des Mobilfunknetz 2 oder des Internet 21 erhalten, um die IP-Verbindung zur Nutzung des Service umzustellen, und zwar auf die am kürzesten entfernte IP-Zieladresse. Neben kürzeren IP-Verbindungen können im Vergleich zur aktuell genutzt IP-Zieladresse, auch aus ökologischer Sicht bessere/vorteilhaftere IP-Verbindungen verwendet werden, indem z.B. bevorzugt Glasfaserverbindungen anstelle von Kupferleitungen verwendet werden, da diese weniger Strom verbrauchen. Dies wäre eine Adaption des erfindungsgemäßen Verfahrens, bei der an die Stelle des verwendeten Endgeräts, das verwendet IP-Netz die Steuerung der Bereitstellung vornimmt.

In einer bevorzugten zweiten Nutzungsform ist die $CO_2$-Erzeugung bei der Nutzung des Service, z. B. des Streaming-Service zu hoch. Hierbei können z.B. drei Fälle unterschieden werden:

1. Der Bereitsteller des Streaming Service liefert im Kontext der Nutzung des Service aktuelle Werte zum Stromverbrauch und/oder insbesondere zur $CO_2$-Erzeugung, die über den Internetanschluss 19, das Internet 21 und das Mobilfunknetz 2, zu dem Endgerät A gelangen.

2. Es wird nach dem erfindungsgemäßen Verfahren ermittelt, welche die aktuelle Werte Stromverbrauch und/oder $CO_2$-Erzeugung sind. Dies geschieht vorzugsweise im Backend 15, unter Verwendung der zentralen Steuerungseinheit 17, der zentralen Bestimmungseinheit 17a und des zentralen Speichers 18. Beispielsweise, indem aus für den Service (z.B. Streaming-Service) veröffentlichten Strombedarfe und Datenmengen in einem zurückliegenden Zeitraum, z.B. vom letzten Jahr, ein Wert errechnet wird, der die Relation von Datenmenge zu Stromverbrauch und/oder $CO_2$-Erzeugung ausdrückt. Das Backend 15 verfügt besonders bevorzugt über einen Zugang zu einer Schnittstelle für ein Portal oder einen Dienstleister (erreichbar über den 14 Internetanschluss und das 21 Internet), wodurch Werte zur aktuellen Stromerzeugung bereitgestellt werden. Aus diesen Werten kann dann ein Wert angegeben werden, der die Relation von Datenrate bzw. Datenmenge zu $CO_2$-Erzeugung und/oder Strommenge zu $CO_2$-Erzeugung ausdrückt. Diese Werte werden dann vom Backend 15, über den Internetanschluss 14, das Internet 21 und das Mobilfunknetz 2 an das Endgerät A übertragen. Alternativ oder ergänzend kann auf gleichem Weg das Backend 15 auch ein Steuersignal an das Endgerät A übertragen, das eine qualitative Angabe zur aktuellen $CO_2$-Erzeugung beinhaltet (z.B. $CO_2$-Erzeugung ist derzeit sehr hoch).

3. Das erfindungsgemäße Verfahren verwendet einen Dienstleister, der Werte je Anbieter eines Service für einen konkreten Service bereitstellt, mit denen sich z.B. aus einer Datenrate bzw. einem Datenvolumen der konkrete Stromverbrauch und/oder $CO_2$-Erzeugung berechnen lässt. Wird ein solcher Dienstleister verwendet, dann kann dieser beispielsweise entweder über das Internet 21 und das Mobilfunknetz 2 diese Werte direkt an das Endgerät A liefern und/oder diese Werte gelangen über das Internet 21, den Internetanschluss 14 an das Backend 15. Bei letzterem erfolgt dann wieder wie bei Fall "2." beschrieben, die Information an das Endgerät A.

Mit den erhalten Werten kann das verwendete Endgerät auf Basis der aktuellen Datenrate bzw. Datenmenge den ökologischen Fußabdruck errechnen. Insbesondere vergleicht die Steuereinheit 4 und/oder 11 den errechneten oder übertragenen Wert mit einem im lokalen Speicher 3 und/oder 12 hinterlegten Referenzwerten. Der Vergleich wird dann auf der Anzeigeeinheit 6 und/oder 13 quantitativ und/oder qualitativ zur Anzeige gebracht. Ist z.B. die CO2-Erzeugung in Bezug auf den hinterlegten Referenzwert zu hoch, erfolgt die im erfindungsgemäßen Verfahren aufgrund der Einstellungen des Nutzers und/oder einer hinterlegten Steuerungsanweisung entsprechende vorgesehene Konsequenz, insbesondere die Steuerung der Bereitstellung der Dienstleistung/ des Service. Diese ist in Speicher 3 und/oder 12 hinterlegt und initiiert z. B. die Verringerung der Auflösung des Streams. Beispielsweise wird die Auflösung des Streams von HD auf SD umgestellt. Im zentralen Speicher 18 ist vorzugsweise diese Einstellung alternativ oder ergänzend ebenfalls hinterlegt, sodass ein Steuersignal an die Steuerungseinheit 4 und/oder 11 übertragen wird.

Analog zum Anbieter eines Service können auch andere an der Bereitstellung des Service beteiligten Dienstleister, zur Berechnung des ökologischen Fußabdrucks herangezogen werden. Diese können z.B. der Betreiber des Mobilfunknetzes 2, der Anbieter des Internetanschusses über das Festnetz 7 und weitere ggf. beteiligte Betreiber des Internets 21 sein. Aus Gründen der Übersichtlichkeit wird darauf verzichtet, die Bereitstellung oder Errechnung dieser Werte für das erfindungsgemäße Verfahren detaillierter auszuführen und darzustellen. Diese Werte können für jeden beteiligten Dienstleister an der Bereitstellung bzw. Übertragung der Dienstleistung bzw. des Service bereitgestellt und/oder bestimmt werden.

In einer bevorzugten dritten Nutzungsform ist die CO2-Erzeugung bei der Nutzung des Service, z.B. Streaming-Service, beim Betreiber des Mobilfunknetzes, Anbieter des Internetanschlusses, Betreiber des Internets und/oder Anbieter des Service zu hoch. Im Gegensatz zur Lieferung konkreter Werte zum ökologischen Fußabdruck zwischen Anbieter des Service, z.B. auf Grundlage der Information des Anbieters des Streaming-Service oder errechnet vom erfindungsgemäßen Verfahren im Backend 15, wird alternativ oder ergänzend ein Steuersignal geliefert, das im erfindungsgemäßen Verfahren übertragen, angezeigt und umgesetzt werden kann. Grundsätzlich kann der Betreiber des Mobilfunknetz, Anbieter des Internetanschluss, Betreiber des Internets und/oder Anbieter des Service dieses Steuersignal aussenden. Das Steuersignal kann sowohl qualitativ als auch quantitativ eine Aussage über den aktuellen ökologischen Fußabdruck beinhalten. So kann z.B. ein SQant (Steuersignal quantitativ) eine Wertung der je Mbit/s anfallenden CO2-Erzeugung beinhalten (z.B. auf einer Skala von minimal "0" bis maximal "10") und z.B. ein Steuersignal SQual (Steuersignal qualitativ) eine Wertung in Bezug der je Mbit/s anfallenden CO2-Erzeugung (z. B. in den Stufen "Gering", "Mittel" und "Hoch") angeben.

Besonders an der bevorzugten dritten Nutzungsform ist, dass Dienstleister - wenn diese eine Überschreitung eines definierten Werts für einen "erlaubten" oder "akzeptablen" ökologischen Fußabdruck feststellen - selbsttätig die Qualität des Service beeinflussen können. So kann dabei z.B. gezielt die Auflösung des Streaming-Service verringert werden (z. B. von **HD** auf SD) und/oder kann die aktuelle Datenrate verringert werden. Bereitsteller von sehr rechenintensiven Services, z.B. von KI-Bots oder Gaming-Service, können zudem die Rechenleistung gezielt verringern.

Wenn ein Dienstleister dementsprechend in die Nutzung des Service, z.B. Streaming-Service und/oder Gaming-Service eingreift, dann ist es vorteilhaft, wenn über ein Steuersignal sowohl die anderen zur Bereitstellung des Service verwendeten Dienstleister informiert werden, als auch das verwendete Endgerät A und/oder Endgerät B.

Durch die Information per Steuersignal können andere Dienstleister ggf. ebenfalls ihren ökologischen Fußabdruck in ihrem Verantwortungsbereich zur Bereitstellung des Service senken, indem z.B. für den Service reservierte Kapazitäten angepasst und ggf. für andere Zwecke freigegeben werden. Bei einem Eingriff eines Dienstleisters in die Bereitstellung des Service sollte vorzugsweise sowohl der handelnde Dienstleister als auch der Grund des Eingriffs auf dem verwendeten Endgerät, z.B. Endgerät A und/oder Endgerät B angezeigt werden, damit eine Verschlechterung bei der Erbringung des Service vom Nutzer des Service konkret einer Ursache zugeordnet werden kann. Beispielsweise sollte diese z.B. bei durch gewählte Voreinstellungen und/oder Tarife bestimmte Reduzierungen der Rechenleistung beim Anbieter eines Gaming-Service dem Nutzer angezeigt werden.


Bezugszeichen

A     Endgerät (Smartphone)
B     Endgerät (Rechner)
S1    Server (Streaming-Service)
S2    Server (Gaming-Service)
2     Mobilfunknetz
3     Speicher lokal A
4     Steuerung lokal A
4a    Bestimmungseinheit lokal A

| 5 | Internet-Gateway A |
|---|---|
| 6 | Anzeige A |
| 7 | Festnetz |
| 8 | Router |
| 9 | Hausnetz |
| 10 | Netzwerkkarte |
| 11 | Steuerung lokal B |
| 11a | Bestimmungseinheit lokal B |
| 12 | Speicher lokal B |
| 13 | Anzeige B |
| 14 | Internetanschluss |
| 15 | Backend |
| 16 | Internet-Gateway |
| 17 | Steuerung zentral |
| 17a | Bestimmungseinheit zentral |
| 18 | Speicher zentral |
| 19 | Internetanschluss S1 |
| 20 | Internetanschluss S2 |
| 21 | Internet |

**Patentansprüche**

1. Verfahren zur Reduzierung eines Verbrauchs an elektrischem Strom und/oder einer resultierenden Kohlendioxidmenge bei Nutzung einer Dienstleistung durch ein Endgerät (A, B) über das Internet (21), umfassend die folgenden Schritte:

   - Bestimmung des Verbrauchs an elektrischem Strom und/oder der resultierenden Kohlendioxidmenge bei der Nutzung der Dienstleistung durch ein Endgerät (A, B) über das Internet (21) mittels einer zentralen Bestimmungseinheit (4a, 11a, 17a), wobei die zentrale Bestimmungseinheit (17a) Bestandteil eines zentralen Backend (15) ist, welches einen Speicher (18) umfasst, der Ortsinformationen von Recheneinheiten, insbesondere Servern (S1, S2), die die Dienstleistung zur Verfügung stellen, aufweist;
   - Mitteilung des Verbrauchs an elektrischem Strom und/oder der resultierenden Kohlendioxidmenge von der Bestimmungseinheit (4a, 11a, 17a) an eine Steuereinheit (4, 11, 17);
   - Anzeigen des Verbrauchs an elektrischem Strom und/oder der resultierenden Kohlendioxidmenge mittels einer Anzeigeeinheit (6, 13) des Endgeräts (A, B);
   - Steuerung der Bereitstellung der Dienstleistung in Abhängigkeit des Verbrauchs an elektrischem Strom und/oder der resultierenden Kohlendioxidmenge mittels der Steuereinheit (4, 11, 17), wobei eine andere Recheneinheit, insbesondere ein anderer Server (S1, S2), für die Zurverfügungstellung der Dienstleistung ausgewählt wird, wobei die andere Recheneinheit einen geringeren Verbrauch an elektrischem Strom und/oder eine geringere resultierende-Kohlendioxidmenge basierend auf der Entfernung zwischen dem Endgerät und der Recheneinheit, insbesondere des Servers (A, B), aufweist.

2. Verfahren nach Anspruch 1, **dadurch gekennzeichnet, dass** die Bestimmung des Verbrauchs an elektrischem Strom und/oder der resultierenden Kohlendioxidmenge anhand der folgenden Kriterien durchgeführt wird:

   - der Dienstleistung und/oder einer Dienstleistungskategorie;
   - einer Qualität, insbesondere einer Auflösung, der Dienstleistung;
   - einer Datenmenge der Dienstleistung;
   - einer Nutzungsdauer der Dienstleistung;
   - eines Ortes einer Recheneinheit, insbesondere eines Servers (S1, S2), von dem die Dienstleistung zur Verfügung gestellt wird;
   - der Entfernung zwischen dem Endgerät (A, B) und dem Ort der Recheneinheit, insbesondere des Servers (S1, S2); und/oder
   - einer Kommunikationsverbindung, die für die Dienstleistung verwendet wird, insbesondere wobei zwischen einer Mobilfunkverbindung und einer Festnetzverbindung unterschieden wird.

3. Verfahren nach einem der vorherigen Ansprüche, **dadurch gekennzeichnet, dass** ein die Dienstleistung zur Verfügung stellender Anbieter für die jeweilige Dienstleistung einen Wert bestimmt, der einen für die zur Verfügungstellung der Dienstleistung erforderlichen Verbrauch an elektrischem Strom und/oder eine für die zur Verfügungstellung der Dienstleistung erforderliche resultierende Kohlendioxidmenge bestimmt und den Bestimmungseinheiten (4a, 11a, 17a) mitteilt, insbesondere wobei der Wert bestimmt wird:

- anhand der Dienstleitung in Relation zu einem Zeitnormal;
- anhand einer Datenrate;
- anhand einer Konstante, die auf dem verwendeten Endgerät auf Grundlage des aktuell übertragenen Datenvolumens für den Service und/oder des Datenvolumens für den Service in einer festgelegten Zeit ermittelt wird; und/oder
- anhand der Dienstleistung pro bestimmte Nutzungseinheit, beispielsweise für das Streamen einer Audioeinheit und/oder das Streamen einer Videoeinheit.

4. Verfahren nach einem der vorherigen Ansprüche, **dadurch gekennzeichnet, dass** beim Anzeigen der Verbrauch an elektrischem Strom und/oder resultierenden Kohlendioxidmenge angezeigt wird:

- im Vergleich mit der bisherigen Nutzung auf dem Endgerät (A, B);
- im Vergleich mit der bisherigen Nutzung auf allen Endgeräten eines Nutzers des Endgeräts (A, B);
- im Vergleich zur Nutzung von anderen Endgeräten;
- im Vergleich zur aktuellen und/oder bisherigen Nutzung eines anderen Endgeräts mit dem geringsten Stromverbrauch und/oder CO2-Erzeugung;
- im Vergleich zur aktuellen und/oder bisherigen Nutzung eines anderen Endgeräts mit dem höchsten Stromverbrauch und/oder CO2-Erzeugungerbrauch; und/oder
- im Vergleich zu mindestens einem Referenzwert.

5. Verfahren nach Anspruch 4, **dadurch gekennzeichnet, dass** ein im Vergleich geringerer Verbrauch an elektrischem Strom und/oder eine geringere resultierende Kohlendioxidmenge hervorgehoben dargestellt wird, insbesondere wobei eine andere Farbe, eine andere Schriftgröße, eine andere Anzeigefeldgröße und/oder eine andere Anzeigeumrandung verwendet wird.

6. Verfahren nach einem der vorherigen Ansprüche, **dadurch gekennzeichnet, dass** die Steuerung der Bereitstellung der Dienstleistung

- manuell durch einen Nutzer des Endgerätes (A, B) erfolgt, der mittels einer Eingabeeinheit eine Änderung der Bereitstellung der Dienstleistung durch die Steuereinheit (4, 11) des Endgeräts (A, B) auslöst; und/oder
- automatisch durch die Steuereinheit (4, 11) eine Änderung der Bereitstellung der Dienstleistung erfolgt, insbesondere wenn ein Referenzwert für den Verbrauch an elektrischem Strom und/oder die resultierende Kohlendioxidmenge überschritten wird.

7. Verfahren nach einem der vorherigen Ansprüche, **dadurch gekennzeichnet, dass** die Steuerung der Bereitstellung der Dienstleistung dadurch erfolgt, dass die Datenrate für die Nutzung der Dienstleistung reduziert wird, insbesondere indem Qualität und/oder Auflösung der Dienstleistung reduziert wird
- .

8. Verfahren nach einem der vorherigen Ansprüche, **dadurch gekennzeichnet, dass** die Bestimmung des Verbrauchs an elektrischem Strom und/oder einer resultierenden Kohlendioxidmenge mittels einer zentralen Bestimmungseinheit (17a) durchgeführt wird, wobei die zentrale Bestimmungseinheit (17a) Bestandteil eines zentralen Backend (15) ist, welches einen Speicher (18) umfasst, der folgenden Informationen aufweist:

- Informationen zum Verbrauch des elektrischen Stroms und/oder der resultierenden Kohlendioxidmenge von Recheneinheiten, insbesondere Servern (S1, S2), die die Dienstleistung zur Verfügung stellen;
- Angaben zu Verbräuchen an elektrischen Strom und/oder der resultierenden Kohlendioxidmenge für die Dienstleistung, insbesondere in Abhängigkeit von Qualität und/oder Auflösung der Dienstleistung; und/oder
- Angaben zu den Kosten, die mit den Verbräuchen an elektrischen Strom und/oder der resultierenden Kohlendioxidmenge verbunden sind,

wobei die Informationen verwendet werden, um den Verbrauch an elektrischem Strom und/oder die resultierende Kohlendioxidmenge zentral zu bestimmen.

9. Verfahren nach Anspruch 8, **dadurch gekennzeichnet, dass** der von der zentralen Bestimmungseinheit (17a) bestimmte Verbrauch an elektrischem Strom und/oder die resultierende Kohlendioxidmenge übermittelt wird an die

- die Bestimmungseinheit (4a, 11a) und/oder die Steuereinheit (4, 11) des Endgerätes (A, B); und/oder
- die die Dienstleistung zur Verfügung stellende Recheneinheit, insbesondere den Server (S1, S2);

insbesondere wobei für die Übermittlung ein Steuersignal übertragen wird, welches bevorzugt den Verbrauch an elektrischem Strom und/oder die resultierende Kohlendioxidmenge mittels eines Parameters angibt.

10. System zur Reduzierung eines Verbrauchs an elektrischem Strom und/oder einer resultierenden Kohlendioxidmenge bei Nutzung einer Dienstleitung durch ein Endgerät (A, B) über das Internet (21), umfassend eine Bestimmungseinheit (4a, 11a, 17a), eine Steuereinheit (4, 11, 17), und eine Anzeigeeinheit (6, 13) des Endgeräts (A, B) dazu eingerichtet das Verfahren gemäß Anspruchs 1 umzusetzen.

## Claims

1. Method for reducing electricity consumption and/or the resulting amount of carbon dioxide when a service is used by a terminal (A, B) over the Internet (21), comprising the following steps:

- determination, by means of a central determination unit (4a, 11a, 17a), of the electricity consumption and/or the resulting amount of carbon dioxide when the service is used by a terminal (A, B) over the Internet (21), the central determination unit (17a) being part of a central backend (15) comprising a memory (18) containing location information relating to computing units, in particular servers (S1, S2) which provide the service;
- communication of the electricity consumption and/or the resulting amount of carbon dioxide from the determination unit (4a, 11a, 17a) to a control unit (4, 11, 17);
- displaying of the electricity consumption and/or the resulting amount of carbon dioxide by means of a display unit (6, 13) of the terminal (A, B);
- control of the provision of the service depending on the electricity consumption and/or the resulting amount of carbon dioxide by means of the control unit (4, 11, 17), with another computing unit, in particular another server (S1, S2), being selected for the supplying of the service, with the other computing unit having a lower electricity consumption and/or a lower resulting amount of carbon dioxide based on the distance between the terminal and the computing unit, in particular the server (A, B).

2. Method according to Claim 1, **characterized in that** the electricity consumption and/or the resulting amount of carbon dioxide is determined on the basis of the following criteria:

- the service and/or a service category;
- a quality, in particular a resolution, of the service;
- an amount of data relating to the service;
- a usage duration of the service;
- a location of a computing unit, in particular a server (S1, S2), by which the service is supplied;
- the distance between the terminal (A, B) and the location of the computing unit, in particular the server (S1, S2); and/or
- a communication connection used for the service, in particular with a distinction being made between a mobile telephony connection and a landline network connection.

3. Method according to either one of the preceding claims, **characterized in that** a provider supplying the service determines a value for the respective service, which value determines an electricity consumption required to supply the service and/or the resulting amount of carbon dioxide required to supply the service and communicates said value to the determination units (4a, 11a, 17a), in particular with the value being determined:

- on the basis of the service in relation to a time standard;
- on the basis of a data rate;
- on the basis of a constant that is ascertained on the terminal used based on the data volume currently being transmitted for the service and/or the data volume for the service at a specified time; and/or
- on the basis of the service per specific usage unit, for example for streaming an audio unit and/or streaming a video unit.

4. Method according to any one of the preceding claims, **characterized in that**, in the display step, the electricity consumption and/or resulting amount of carbon dioxide is displayed:

- in comparison with the previous use on the terminal (A, B);
- in comparison with the previous use on all terminals of a user of the terminal (A, B);
- in comparison with the use of other terminals;
- in comparison with the current and/or previous use of another terminal with the lowest electricity consumption and/or $CO_2$ generation;
- in comparison with the current and/or previous use of another terminal with the highest electricity consumption and/or $CO_2$ generation; and/or
- in comparison with at least one reference value.

5. Method according to Claim 4, **characterized in that** a comparatively lower electricity consumption and/or a lower resulting amount of carbon dioxide is highlighted, in particular with a different colour, a different font size, a different display field size and/or a different display border being used.

6. Method according to any one of the preceding claims, **characterized in that** the control of the provision of the service

- is performed manually by a user of the terminal (A, B), who triggers a change in the provision of the service by way of the control unit (4, 11) of the terminal (A, B) by means of an input unit; and/or
- the provision of the service is changed automatically by the control unit (4, 11), in particular if a reference value for the electricity consumption and/or the resulting amount of carbon dioxide is exceeded.

7. Method according to any one of the preceding claims, **characterized in that** the provision of the service is controlled by virtue of
the data rate for the use of the service being reduced, in particular by virtue of the quality and/or resolution of the service being reduced.

8. Method according to any one of the preceding claims, **characterized in that** the electricity consumption and/or a resulting amount of carbon dioxide is determined by means of a central determination unit (17a), the central determination unit (17a) being part of a central backend (15) comprising a memory (18) containing the following information:

- information relating to the electricity consumption and/or the resulting amount of carbon dioxide from computing units, in particular servers (S1, S2), which provide the service;
- details regarding the electricity consumption and/or the resulting amount of carbon dioxide for the service, in particular depending on the quality and/or resolution of the service; and/or
- details regarding the costs associated with the electricity consumption and/or the resulting amount of carbon dioxide,

the information being used to centrally determine the electricity consumption and/or the resulting amount of carbon dioxide.

9. Method according to Claim 8, **characterized in that** the electricity consumption and/or the resulting amount of carbon dioxide determined by the central determination unit (17a) is transmitted to

- the determination unit (4a, 11a) and/or the control unit (4, 11) of the terminal (A, B); and/or
- the computing unit supplying the service, in particular the server (S1, S2);

in particular with a control signal being transmitted for the transmission, which control signal preferably indicates the electricity consumption and/or the resulting amount of carbon dioxide by means of a parameter.

10. System for reducing the electricity consumption and/or the resulting amount of carbon dioxide when a service is used by a terminal (A, B) over the Internet (21), comprising a determination unit (4a, 11a, 17a), a control unit (4, 11, 17), and a display unit (6, 13) of the terminal (A, B), said system being designed to implement the method according to Claim 1.

**Revendications**

1. Procédé de réduction d'une consommation de courant électrique et/ou d'une quantité de dioxyde de carbone résultante lors de l'utilisation d'un service par un terminal (A, B) par le biais de l'Internet (21), comprenant les étapes suivantes :

   - détermination de la consommation de courant électrique et/ou de la quantité de dioxyde de carbone résultante lors de l'utilisation du service par un terminal (A, B) par le biais de l'Internet (21) au moyen d'une unité de détermination centrale (4a, 11a, 17a), l'unité de détermination centrale (17a) faisant partie d'un système d'arrière-plan central (15), lequel comporte une mémoire (18), qui possède des informations d'emplacement d'unités de calcul, en particulier de serveurs (S1, S2), qui mettent le service à disposition ;
   - communication de la consommation de courant électrique et/ou de la quantité de dioxyde de carbone résultante de l'unité de détermination (4a, 11a, 17a) à une unité de commande (4, 11, 17) ;
   - affichage de la consommation de courant électrique et/ou de la quantité de dioxyde de carbone résultante au moyen d'une unité d'affichage (6, 13) du terminal (A, B) ;
   - commande de la fourniture du service en fonction de la consommation de courant électrique et/ou de la quantité de dioxyde de carbone résultante au moyen de l'unité de commande (4, 11, 17), une autre unité de calcul, en particulier un autre serveur (S1, S2), étant sélectionnée pour la mise à disposition du service, l'autre unité de calcul présentant une consommation de courant électrique plus faible et/ou une quantité de dioxyde de carbone résultante plus faible en fonction de la distance entre le terminal et l'unité de calcul, en particulier du serveur (A, B).

2. Procédé selon la revendication 1, **caractérisé en ce que** la détermination de la consommation de courant électrique et/ou de la quantité de dioxyde de carbone résultante est effectuée à l'aide des critères suivants :

   - le service et/ou une catégorie de service ;
   - la qualité, en particulier une résolution, du service ;
   - une quantité de données du service ;
   - une durée d'utilisation du service ;
   - un emplacement d'une unité de calcul, en particulier d'un serveur (S1, S2), à partir duquel le service est mis à disposition ;
   - la distance entre le terminal (A, B) et l'emplacement de l'unité de calcul, en particulier du serveur (S1, S2) ; et/ou
   - une connexion de communication qui est utilisée pour le service, une distinction étant notamment faite entre une connexion de radio mobile et une connexion de réseau fixe.

3. Procédé selon l'une des revendications précédentes, **caractérisé en ce qu'**un prestataire qui met le service à disposition détermine, pour le service respectif, une valeur qui détermine et communique aux unités de détermination (4a, 11a, 17a) une consommation de courant électrique nécessaire à la mise à disposition du service et/ou une quantité résultante de dioxyde de carbone nécessaire à la mise à disposition du service, la valeur étant notamment déterminée :

   - à l'aide du service par rapport à une base de temps ;
   - à l'aide d'un débit de données ;
   - à l'aide d'une constante, qui est identifiée sur le terminal utilisé sur la base du volume de données actuellement transmis pour le service et/ou du volume de données pour le service dans un laps de temps spécifié ; et/ou
   - à l'aide du service par unité utilisateur déterminée, par exemple pour la diffusion en continu d'une unité audio et/ou la diffusion en continu d'une unité vidéo.

4. Procédé selon l'une des revendications précédentes, **caractérisé en ce que** lors de l'affichage, la consommation de courant électrique et/ou la quantité de dioxyde de carbone résultante est affichée :

   - par rapport à l'utilisation antérieure sur le terminal (A, B) ;
   - par rapport à l'utilisation antérieure sur tous les terminaux d'un utilisateur du terminal (A, B) ;
   - par rapport à l'utilisation d'autres terminaux ;
   - par rapport à l'utilisation actuelle et/ou antérieure d'un autre terminal dont la consommation d'électricité et/ou la production de $CO_2$ est la plus faible ;
   - par rapport à l'utilisation actuelle et/ou antérieure d'un autre terminal ayant la consommation d'électricité et/ou la consommation de $CO_2$ la plus élevée ; et/ou
   - par rapport à au moins une valeur de référence.

**5.** Procédé selon la revendication 4, **caractérisé en ce qu'**une consommation de courant électrique comparativement plus faible et/ou une quantité de dioxyde de carbone résultante comparativement plus faible est représentée mise en valeur, une autre couleur, une autre taille de police, une autre taille de champ d'affichage et/ou une autre bordure d'affichage étant notamment employée.

**6.** Procédé selon l'une des revendications précédentes, **caractérisé en ce que** la commande de la fourniture du service

- est effectuée manuellement par un utilisateur du terminal (A, B), qui déclenche une modification de la fourniture du service par l'unité de commande (4, 11) du terminal (A, B) au moyen d'une unité d'entrée ; et/ou
- une modification de la fourniture du service est effectuée automatiquement par l'unité de commande (4, 11), en particulier lorsqu'une valeur de référence pour la consommation de courant électrique et/ou la quantité de dioxyde de carbone résultante est dépassée.

**7.** Procédé selon l'une des revendications précédentes, **caractérisé en ce que** la commande de la fourniture du service est effectuée **en ce que** le débit de données pour l'utilisation du service est réduit, en particulier en réduisant la qualité et/ou la résolution du service.

**8.** Procédé selon l'une des revendications précédentes, **caractérisé en ce que** la détermination de la consommation de courant électrique et/ou d'une quantité de dioxyde de carbone résultante est effectuée au moyen d'une unité de détermination centrale (17a), l'unité de détermination centrale (17a) faisant partie d'un système d'arrière-plan central (15), lequel comporte une mémoire (18) qui possède les informations suivantes :

- des informations sur la consommation de courant électrique et/ou la quantité de dioxyde de carbone résultante d'unités de calcul, en particulier de serveurs (S1, S2), qui mettent le service à disposition ;
- des informations sur la consommation de courant électrique et/ou la quantité de dioxyde de carbone résultante pour le service, en particulier en fonction de la qualité et/ou de la résolution du service ; et/ou
- des informations sur les coûts qui sont liés à la consommation de courant électrique et/ou la quantité de dioxyde de carbone résultante,

les informations étant utilisées pour déterminer de manière centralisée la consommation de courant électrique et/ou la quantité de dioxyde de carbone résultante.

**9.** Procédé selon la revendication 8, **caractérisé en ce que** la consommation de courant électrique et/ou la quantité de dioxyde de carbone résultante déterminée par l'unité de détermination centrale (17a) est communiquée à

- l'unité de détermination (4a, 11a) et/ou l'unité de commande (4, 11) du terminal (A, B) ; et/ou
- l'unité de calcul, en particulier le serveur (S1, S2), qui met le service à disposition ;

un signal de commande étant notamment transmis pour la communication, lequel indique de préférence la consommation de courant électrique et/ou la quantité de dioxyde de carbone résultante au moyen d'un paramètre.

**10.** Système de réduction d'une consommation de courant électrique et/ou d'une quantité de dioxyde de carbone résultante lors de l'utilisation d'une service par un terminal (A, B) par le biais de l'Internet (21), comprenant une unité de détermination (4a, 11a, 17a), une unité de commande (4, 11, 17) et une unité d'affichage (6, 13) du terminal (A, B) conçues pour mettre en œuvre le procédé selon la revendication 1.

EP 4 468 685 B1

**Fig. 1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2022048889 A1
- US 2014324407 A1